# EUROPEAN PATENT APPLICATION

(11) **EP 2 030 778 A1**
(43) Date of publication of application: **04.03.2009**
(21) Application number: 08252914.0
(22) Date of filing: 02.09.2008
(51) Int. Cl.: B32B 17/10, C03C 27/12, C08J 7/04

(54) **Decorative laminated glass**

(30) Priority: 03.09.2007 JP 2007227605; 30.07.2008 JP 2008196463
(71) Applicant: Bridgestone Corporation, Tokyo 104-0031 (JP)
(72) Inventor: Ikeda, Tetsuro, Kanagawa 244-8510 (JP)
(74) Representative: Whalley, Kevin

(57) **Abstract**

The present invention provides a decorative laminated glass which maintains the appearance property such as transparency and design for a long time period.
A decorative laminated glass comprising two transparent substrates 120 and an intermediate film 110 including two adhesive resin films 113 and a base film 112 having an ink layer 111 printed in a predetermining pattern therebetween, the intermediate film 110 being arranged between the transparent substrates 120 to be combined with each other,
wherein the base film 112 is subjected to an adhesion-facilitating treatment and
the adhesive resin film 111 comprises an ethylene vinyl acetate copolymer.

## Description

### Background of the Invention

### 1. Field of the Invention

The present invention relates to a decorative laminated glass including a base film having an exquisitely decorated pattern.

### 2. Description of the Related Art

Laminated glasses having a structure comprising two glass plates and a transparent adhesive agent layer arranged therebetween have already been known. The intermediate film enhances penetration resistance of the laminated glass. If a laminated glass for automobile is broken to break into the automobile and steal, it can interfere with opening window. Therefore, the laminated glass is useful as a security glass. In addition, the glass fragments broken by external shock are not scattered, because it adhere to the intermediate film.

The laminated glass is used as front and side glass of aircraft and automobile and also as window glass of construction. Therefore, the laminated glass is needed to have high transparency in addition to the penetration resistance and the safeness such as the prevention of scattering of the glass fragments. There are available laminated glasses that have additional favorable properties in addition to the properties above.

A sheet-shaped PVB resin films comprising polyvinylbutyral resin (referred to as "PVB") and plasticizer is used as the intermediate film of the conventional laminated glasses (Patent Document 1). PVB resin has excellent impact resistance and penetration resistance. However, PVB resin does not have moisture resistance sufficiently, because it is susceptible to moisture. If white spots are appeared in the intermediate film comprising PVB resin over time by permeated moisture at high temperature, appearance property and transparency of the laminated glass are reduced. For that reason, a resin film comprising ethylene vinyl acetate copolymer (hereinafter, referred to as "EVA") having excellent moisture resistance and sound insulation and being inexpensive is proposed as the intermediate film for laminated glasses (Patent Document 2)

Recently, the laminated glass is used for applications such as walls and windows of exterior and interior construction materials, screen, illumination apparatus and plastic art. As the applications are expanded, the laminated glass is decorated by pattern printing or coloring in order to enhance convenience. For example, Patent Document 3 discloses a decorative laminated glass comprising two transparent substrates and an intermediate film including two adhesive resin films and a base film having an ink layer printed in a predetermining pattern and arranged between the adhesive resin films, and the intermediate film being arranged between the transparent substrates to be combined with each other.
Patent Document 1: JP-A No, 2006-160562
Patent Document 2: JP-A No. 57-196747
Patent Document 3: JP-A No. 08-157239

### Summary of the Invention

However, when the conventional decorative laminated glass comprising the adhesive resin film and the base film are used for a long time period under high-temperature and high-humidity environment, the appearance property of the decorative laminated glass such as transparency and design is apt to be deteriorated by separating the ink layer from the base film.

Therefore, an object of the present invention is to provide a decorative laminated glass which maintains the appearance property such as transparency and design for a long time period.

The ink layer adheres firmly to the adhesive resin film compared with the base film, whereby the ink layer is separated from the base film. Specifically, in case the decorative laminated glass is used for long time period under high-temperature and high-humidity environment and the moisture permeates the inside of it , the adhesion of the ink layer to the base film is reduced over time, because the ink layer adheres firmly to the adhesive resin layer. For this reason, the ink layer is separated from the base film.

As a result of conducting extensive research to solve the aforementioned object, the inventor found that the object can be solved by subjecting the base film to adhesion-facilitating treatment.

Accordingly, the present invention can resolve the above object by a decorative laminated glass comprising two transparent substrates and an intermediate film including two adhesive resin films and a base film having an ink layer printed in a predetermining pattern therebetween, the intermediate film being arranged between the transparent substrates to be combined with each other,

Wherein the base film is subjected to an adhesion-facilitating treatment and
the adhesive resin film comprises an ethylene vinyl acetate copolymer.

The preferred embodiments of the decorative laminated glass according to the present invention are set forth below;
(1) The base film has an adhesion-facilitating layer comprising a transparent adhesive resin thereon.
(2) The transparent adhesive resin is an acrylic resin.
(3) The base film is a subjected to a corona treatment or plasma treatment.

### Brief Description of the Drawings

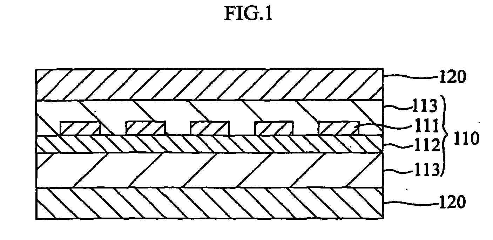

Figure 1 is a schematic crosssectional view illustrating a decorative laminated glass according to the present invention.

### EXPLANATION OF REFERENCES

110: Intermediate film,
111: Ink layer,
112: Base film,
113: Adhesive resin film,
120: Transparent substrate.

### Detailed Description of the Invention

A schematic sectional view of the decorative laminated glass according to the present invention is shown in Figure 1. As shown in Figure 1, the decorative laminated glass according to the present invention comprises two transparent substrates 120 and an intermediate film 110 including two adhesive resin films 113 and a base film 112 having an ink layer 111 printed in a predetermining pattern therebetween. The intermediate film 110 is arranged between the transparent substrates 120 to be combined with each other

The base film of the decorative laminated glass is subjected to an adhesion-facilitating treatment. The adhesion-facilitating treatment improves the adhesion of the base film to the ink layer, whereby the adhesion differences between the ink layer and the adhesive resin film and between the ink layer and the base film are reduced. Therefore, in case the decorative laminated glass is used for long time period under high-temperature and high-humidity environment, the separation between the base film and the ink layer is prevented. Hence, the decorative laminated glass according to the present invention maintains the appearance property such as transparency and design for a long time period.

### (Adhesion-facilitating treatment)

The adhesion-facilitating treatment of the base films is carried out in order to improve the adhesion of the base film such as polyethylene terephthalate film to the ink layer.

Examples of the base film subjected to the adhesion-facilitating treatment include (i) a base film having an adhesion-facilitating layer comprising transparent adhesive resin, (ii) a base film subjected to corona treatment and plasma treatment and (iii) a base film having an adhesion-facilitating layer comprising oxide of metal selected from Si, Ti, Sn, Al and Zn. These adhesion-facilitating treatments are carried out by a simple method, whereby the manufacturing efficiency is improved. Of them, the base films (i) and (ii) are preferred, because these films have the high adhesion without decreasing the transparency of it.

The base film having the adhesion-facilitating layer comprising transparent adhesive resin is explained in detail below.

Examples of the transparent adhesive resins preferably include a polyester resin, a polyurethane resin, an acrylic resin and a vinyl acetate resin.

Examples of the polyester resins include polyethylene terephthalate, polybutylene terephthalate, polytrimethylene terephthalate and 2,6-polyethylene naphthalate.

Examples of the polyurethane resins include polyurethane resins obtained by reacting an organic diisocyanate compound with a polymeric diol compound to synthesize a urethane prepolymer, and if necesarry reacting the prepolymer with a chain elongation agent and a reaction terminating agent.

Examples of the organic diisocyanate compounds include an aromatic diisocyanate compound such as tolylenediisocyanate, cycloaliphatic diisocyanate compounds such as 1,4-cyclohexanediisocyanate and isophoronediisocyanate, aliphatic diisocyanate compound such as hexamethylenediisocyanate, and aromatic aliphatic diisocyanate compound such as α,α,α',α',-tetramethylxylylenediisocyanate. These compounds can be each used singly, or in combination of two more kinds. Of them, the cycloaliphatic diisocyanate compound, the aliphatic diisocyanate compound and the aromatic aliphatic diisocyanate compound are preferred.

Examples of the polymeric diol compounds includes polymeric diol compound, for example polyesterdiol compound such as polycaprolactonediols, polyesterdiols produced by condensation reaction of one or more diacid base such as adipic acid, sebacic acid and acid phthalic anhydride, with one or more glycols such as ethyleneglycol, propyleneglycol, 1,4-butanediol, neopentylglycol and 3-methyl-1,5-pentandiol; polyalkyleneglycol such as polyethyleneglycol, polypropyleneglycol; and polyetherdiolcompound such as alkyleneoxide adducts (for example ethyleneoxide of bisphenol A, propyleneoxide). The number average molecular weight of the polymeric diol compound preferably is in the range of 300 to 6,000. The polymeric diol compound is combined preferably with one or more low-molecular-weight diol compound, for example alkane diols such as 1,4-pentanediol, 2,5-hexanediol, 3-methyl-1,5-pentanediol, ethyleneglycol, propylenglycol, 1,4-butanediol and 1,3-butanediol. With regard to the ratio of the organic diisocyanate compound to the polymeric diol compound, the equivalent ratio of isocyanate group/hydroxyl group preferably is in the range of (1.3 - 3.0)/1.0, more preferably (1.5 - 2.0)/1.0.

As the chain elongation agent, low-molecular-weight diamine compound and diol compound can be used. As the reaction terminating agent, monoamine compound and monoalcohol compound can be used.

In the present invention, the polyurethane resin obtained by conventional method using the above materials can be used. The weight-average molecular weight of the polyurethane resin preferably is in the range of 5,000 to 200,000.

In the present invention, the polyurethane resin obtained by conventional method using the above materials can be used. The weight-average molecular weight of the polyurethane resin is preferably in the range of 5,000 to 200,000.

Two-pack curable type polyurethane resin (two-pack curable type polyester polyurethane resin) comprising a polyesterpolyol as the major agent and an isocyanate as the cross-linking agent (cure agent) can be used as the polyurethane resin.

Examples of the acrylic resins include a homopolymer, for example, alkyl acrylate esters such as methyl acrylate, ethyl acrylate, butyl acrylate and hexyl acrylate, alkyl methacrylate esters such as methyl methacrylate, ethyl methacrylate, butyl methacrylate and hexyl methacrylate. The polymethylmethacrylate, polyethylmethacrylate and polybutylmethacrylate are preferred.

The vinyl acetate resin is produced by polymerizing vinyl acetate. On the other hand, the polyvinyl acetate resin includes a resin produced by hydrolyzing less than 50% of vinyl acetate unit of the polyvinyl acetate resin. In addition, the vinyl acetate resin includes a homopolymer of vinyl acetate, or a copolymer produced by porymerization of the vinyl acetate and the other monomer (for example, olefin such as ethylene) having not less than 50 mole% of the vinyl acetate unit. The vinyl acetate resins can be each used singly, or in conbiantion of two more kinds.

Among the transparent adhesive resins described above, the acrylic resin and the polyurethane resin are preferred, in particular the acrylic resin is preferred, because these resins have high adhesion to the ink layer and the base film.

The adhesion-facilitating layer comprising the transparent adhesive resin may comprise cure agent and radical polymerization initiator, if necessary.

An amino resin can be used as the cure agent, if the transparent adhesive resin has hydroxyl group. Examples of the amino resins include a resin obtained by synthesizing formaldehyde and at least one of melamine, urea, benzoguanamine and glycoluril and etherifying part or all of the methylol groups thereof with a lower alcohols such as methanol, ethanol, propanol, isopropanol, butanol and isobutanol. The amount of the amino resin generally is in the range of 5 to 50 parts by weight based on 100 parts by weight of the transparent adhesive resin having hydroxyl group.

Polyamine, polycarboxylic acid and acid anhydride can be used as the cure agent, if the transparent adhesive resin has glycidyl group.

Examples of the polyamines include diethylenetriamine, dipropylenetriamine, triethylenetetramine, tetraethylenepentamine, dimethylaminopropylamine, diethylaminopropylamine, dibutylaminopropylamine, hexamethylenediamine, N-aminoethylpiperazine, trimethylhexamethylenediamine, bis-(hexamethylene)triamine, dicyandiamide, diacetone acrylamide, polyoxypropylenediamine, 3,3'-dimethyl-4,4'-diaminodicyclohexylmethane, 3-amino-1-cyclohexylaminopropane, 4,4'-diaminodicyclohexylmethane, isophoronediamine, 1,3-bis(aminomethyl)cyclohexane, mixtures of N-dimethylcyclohexylaminopropane and 4,4'-diaminodicyclohexylaminopropane, 4,4'-diaminodiphenylmethane(methylenedianiline), 4,4'-diaminodiphenylether, diaminodiphenylsulfone, m-phenylenediamine, 2,4-toluilenediamine, 2,6-toluilenediamine, 2,3-toluilenediamine, 3,4-toluilenediamine, meta xylylenediamine, xylylenediamine.

Examples of the polycarboxylic acids include phthalic acid, hydroxyisophthalic acid, succinic acid, sebacic acid, maleic acid, dodecenylsuccinic acid, chlorendic acid, pyromellitic acid, trimellitic acid, hexahydrophthalic acid, methylhexahydrophthalic acid, tetrahydrophthalic acid, methyltetrahydrophthalic acid, methyl nadate.

Examples of the acid anhydrides include maleic anhydride, dodecenylsuccinic anhydride, chlorendic anhydride, sebacic anhydride, phthalic anhydride, pyromellitic anhydride, trimellitic anhydride, cyclopentane-tetracarboxylic dianhydride, hexahydrophthalic anhydride, methylhexahydrophthalic anhydride, tetramethylenemaleic anhydride, tetrahydrophthalic anhydride, methyltetrahydrophthalic anhydride, endomethylene tetrahydrophthalic anhydride, methyl endomethylene tetrahydrophthalic anhydride,
5-(2,5-dioxotetrahydroxyfuryl)-3-methyl-3-cyclohexene-1,2-dicarboxylic anhydride, methylnadic anhydride.

The amount of the cure agent generally is in the range of 0.1 to 5 parts by weight based on 100 parts by weight of the transparent adhesive resin having glycidyl group.

Examples of the radical polymerization initiators include organic peroxide, inorganic peroxide, thermal polymerization initiator such as azo-type thermal polymerization initiator, and photopolymerization initiators such as acetophenone, benzoin, benzophenone, thioxanthone, phosphine oxide, ketal and quinone. In particular, organic peroxide is preferred.

The adhesion-facilitating layer comprising the transparent adhesive resin may comprise ultraviolet absorbent, infrared absorbent, antioxidant, paint processing aid and colorant in small amounts, and, if necessary, fillers such as carbon black, hydrophobic silica and calcium carbonate in small amounts.

The thickness of the adhesion-facilitating layer comprising the transparent adhesive resin preferably is in the range of 0.05 to 5 µm, in particular 0.1 to 2 µm. If the thickness is in the range, it is possible to ensure sufficiently the adherence property.

The adhesion-facilitating layer comprising the transparent adhesive resin can be prepared by coating the base film with a composition comprising the transparent adhesive resin and, if necessary, other component described above to form a coated layer and drying the coated layer.

The base film on which the adhesion-facilitating layer comprising the transparent adhesive resin is formed may be subjected to a corona treatment or a plasma treatment. In other words, the adhesion-facilitating layer comprising the transparent adhesive resin may be formed on the base film subjected to the corona treatment or the plasma treatment. This can enhance the adhesion of the base film to the ink layer.

The base film (ii) subjected to corona treatment and plasma treatment is explained in detail below. The corona treatment and plasma treatment can cause the surface of the base film to form fine unevenness, so that the adhesion of base film to the ink layer can be improved.

In the corona treatment, when a region of a strong electric field is localized as in the case that a high-voltage is applied to an electric wire, the localized electric discharge (corona electric discharge) is generated in the region. The surface of the base film is activated by placing it under the electric discharge.

The base film can be subjected to the corona treatment by using a corona treater which is generally available to a skilled person. The corona electric discharge is generated usually by using alternating-current. The positive or negative corona can be used, if necessary. The corona treatment can be carried out by using a corona electric discharge treater which has a high-frequency oscillator and electrodes and can treat continuously, and passing the base film between the corona electric discharge electrode and the electrode couple.

On the other hand, in the plasma treatment, a high voltage is applied to a low-pressure gas atmosphere, and then the base film is exposed to the glow discharge to treat the surface of the base film with active particles generated by the glow discharge such as electron, ion, exited atom, radical and ultraviolet.

The plasma treatment can be carried out by using a plasma treater which is generally available to a skilled person. The plasma discharge can be carried out under reduced pressure or atmosphere pressure. From the viewpoint of cost of the plasma treater, it is preferable to discharge under the atmosphere pressure.

Examples of the gases which can be used to generate the plasma gas include inactive gases such as helium, argon, krypton, xenon, neon, radon and nitrogen, oxygen, air, carbon monoxide, carbon dioxide, carbon tetrachloride, chloroform, hydrogen, ammonia, carbon tetrafluoride, trichlorofluoroethane and trichlorofluoromethane. In addition, a fluorogas and a mixed gas of the above gasses can be used. Examples of the preferred combinations of the gasses include argon/oxygen, argon/ammonia, argon/helium/oxygen, argon/carbon dioxide, argon/nitrogen/nitrogen, argon/helium/carbon dioxide, argon/helium/nitrogen/carbon dioxide, argon/helium, argon/helium/acetone, helium/acetone, helium/air and argon/helium/sirane.

The gas pressure of the system at the plasma treatment is preferably in the range of 0.001 to 0.1 Torr, preferably 0.01 to 0.5 Torr. The treatment time of it is preferably from 1 to 5 minutes.

### (Base film)

Examples of the base films include nylon, polyurethane, polyacrylate, polyester, polycarbonate, cellulose acetate and cellulose triacetate, polyvinyl chloride polymer and copolymer. Of them, polyvinylbutyral, polyethylene terephthalate, polycarbonate and polymethyl methacrylate, in particular polyethylene terephthalate (PET) are preferred, because these are less deteriorated by the processing treatments (heating, solvent and bending) and have an excellent transparency.

The thickness of the base film normally is in the range of 20 to 500 µm. The base film may comprise other additives such as rubber component, extender pigment, flame retardant, ultraviolet absorbent, photostabilizers and colorant, if necesarry.

### (Ink layer)

The ink layer can be formed by adding a colorant and, if necessary, additives to a vehicle containing a binder resin to prepare an ink and printing, for example gravure printing, the ink in a predetermining pattern.

Examples of the vehicles which can be used in the ink include binder resins such as cellulose derivatives, styrene resin or styrene copolymer, acrylic resin, vinyl polymer, thermosetting resin, and fluorine resin. These vehicles can be each used singly, or in combination of two more kinds.

Examples of the cellulose derivatives include ethylcellulose, cellulose nitrate, cellulose acetate, ethylhydroxyethylcellulose and cellulose acetate propionate. Examples of the styrene resins include polystyrene and poly α-methylstyrene. Examples of the acrylic resins include polymethyl methacrylate, polyethyl methacrylate, polyethyl acrylate and polybutyl acrylate. Examples of the vinyl polymers include polyvinyl chloride, polyvinyl acetate, vinyl chloride/vinyl acetate copolymers and polyvinyl butyral. Examples of the thermosetting resins include phenol resin, urea resin, diallyl phthalate resin, melamine resin, guanamine resin, unsaturated polyester resin, polyurethane resin, epoxy resin, aminoalkyd resin, melamine/urea cocondensation resin, silicone resin and polysiloxane resin. The fluorine resin is a resin having fluoroolefin units. Examples of the raw materials of the fluoroolefin units include tetrafluoroethylene, chlorotrifluoroethylene, trifluoroethylene, vinylidene fluoride, hexafluoropropylene and pentafluoropropylene. In particular, polytetrafluoroethylene (PTFE) is preferred.

The vehicle which can be used for the ink may comprise a solvent. Examples of the solvents include hydrocarbon solvents such as toluene, xylene and high-boiling-point petroleum hydrocarbon; ketone solvents such as methylethylketone, methylisobutylketone, cyclohexanone and isophorone; ester solvents such as ethyl acetate, butyl acetate, ethylene glycol monoethylether acetate, and diethylene glycol monoethylether acetate; alcoholic solvents such as methanol, ethanol and butanol; ether alcoholic solvents such as ethylene glycol monoethylether, ethylene glycol monobutylether and diethylene glycol monobutylether. These solvents can be each used singly, or in combination of two more kinds.

Any known pigment or dye can be used as the colorant which can be used in the ink. The examples of the colorants include inorganic pigments such as titanium white, zinc white, carbon black, iron black, iron red, chrome vermilion, chrome yellow, titanium yellow, ultramarine and cobalt blue; organic pigments (and dyes) such as phthalocyanine blue, Indanthren blue, isoindolinone yellow, Benzidine Yellow, quinacridone red, polyazo red, and aniline black; metal pigments of scale-like powder such as aluminum and brass; pearlescent pigments of scale-like powder such as titanium dioxide-coated mica and basic lead carbonate.

Examples of the additives which can be used for the ink if necessary, include cure agents such as cross-linking agent and polymerization initiator; polymerization accelerators, resins such as polyacrylic ester, flax-seed oil-modified alkyd resin, polystyrene, rosin resin, terpene phenol resin, and alkylphenol-modified xylene resin; plasticizer, wax, drier, dispersant, thickener, gelling agent, thixotropy-providing agent, antifoam, foam suppressor, sedimentation inhibitor, filming inhibitor, drying inhibitor, antioxidant, lubricant, fungicide, ultraviolet absorbent, delustering agent, antistatic agent, stabilizer, flame retardant, surface tension adjusting agent, surfactant and viscosity adjusting agent. These additives can be used depending on the applications of the laminated glass.

The ink can be printed on the base film subjected to the adhesion-facilitating treatment by known printing method such as curtain flow coating, roll coating, gravure offset printing, screen printing and inkjet printing. If the ink comprises the cure agent, the printed ink can be cured by irradiating electron beam.

Examples of the patterns of the ink layer include woodgrain, stone-like, cloth-like, sand-like, suede pattern, tile pattern, brick pattern, geometric pattern, character, symbol and entire surface painting. These patterns can be used in combination of two more kinds and selected depending on the applications of the laminated glass.

### (Adhesive resin film)

The adhesive resin film is used for combining the base film having the ink layer with the transparent substrate. The adhesive resin film comprises a transparent adhesive resin which can adhere to the transparent substrate, etc., by heating under pressure at the time of manufacturing the decorative laminated glass.

Ethylene vinyl acetate copolymer (EVA) preferably is used as the transparent adhesive resin. EVA can enhance durability of the decorative laminated glass, because EVA has excellent adherence property and can adhere firmly to the transparent substrate, etc.

A vinyl acetate unit of the ethylene vinyl acetate copolymer is preferably contained in the amount of 20 to 35 mass by weight, especially 24 to 28 mass by weight based on 100 parts by weight of the ethylene vinyl acetate copolymer. When the amount of the vinyl acetate unit is less than 20 mass by weight, the transparency of the intermediate film is apt to be reduced. When the amount of the vinyl acetate unit is more than 35 mass by weight, the hardness of the intermediate film is apt to be insufficient at the heating.

The adhesive resin film preferably contains a cross-linking agent, in addition to EVA. The cross-linking agent can enhance the crosslink density of EVA to improve the adherence property.

Any organic peroxides that can be decomposed at a temperature of not less than 100°C to generate radical(s) can be used as the cross-linking agent. The organic peroxide is selected in the consideration of film-forming temperature, condition for preparing the composition, curing (bonding) temperature, heat resistance of body to be bonded, storage stability. Especially, preferred are those having a decomposition temperature of not less than 70°C in a half-life of 10 hours.

From the viewpoint of resin processing temperature and storage stability, examples of the organic peroxides include benzoyl peroxide-type cure agent, tert-hexyl peroxypyvalate, tert-butyl peroxypyvalate, 3,5,5-trimethyl hexanoyl peroxide, di-n-octanoyl peroxide, lauroyl peroxide, stearoyl peroxide, 1,1,3,3-tetramethylbutylperoxy-2-ethyl hexanoate, succinic acid peroxide, 2,5-dimethyl-2,5-di(2-ethylhaxanoylperoxy)hexane, 1-cyclohexyl-1-methylethylperoxy-2-ethyl hexanoate, tert-hexylperoxy-2-ethyl hexanoate, 4-methylbenzoyl peroxide, tert-butylperoxy-2-ethyl hexanoate, m-toluoyl + benzoyl peroxide, benzoyl peroxide, 1,1-bis(tert-butylperoxy)-2-methylcyclohexanate, 1.1-bis(tert-hexylperoxy)-3,3,5-trimethylcyclohexanate, 1,1-bis(tert-hexylperoxy)cyclohexanate, 1,1-bis(tert-butylperoxy)cyclohexanate, 2,2-bis(4,4-di-tert-butylperoxycyclohexyl)propane, 1,1-bis(tert-butylperoxy)cyclododecane, 1,1-bis(tert-hexylperoxy)-3,3,5-trimethylcyclohexane tert-hexylperoxyisopropyl monocarbonate, tert-butylperoxy maleic acid, tert-butylperoxy-3,3,5-trimethyl hexanoate, tert-butyl peroxylaurate, 2,5-dimethyl-2,5-di(methylbenzoylperoxy)hexane, tert-butylperoxyisopropyl monocarbonate, tert-butylperoxy-2-ethylhexyl monocarbonate, tert-hexyl peroxybenzoate, 2,5-di-methyl-2,5-di(benzoylperoxy)hexane, t-butylperoxyisopropyl carbonate and t-butylperoxy-2-ethylhexyl carbonate.

Examples of the benzoyl peroxide-type cure agents include benzoyl peroxide, 2,5-dimethylhexyl 12,5-bisperoxybenzoate, p-chlorobenzoyl peroxide, m-toluoyl peroxide, 2,4-dichlorobenzoyl peroxide, t-butyl peroxybenzoate and the like. The cross-linking agents can be each used singly, or in combination of two more kinds.

The cross-linking agent preferably is the organic peroxide, in particular tert-butylperoxy-2-ethylhexyl monocarbonate or 1,1-bis(tert-hexylperoxy)-3,3,5-trimethylcyclohexane. These organic peroxides can enhance the cross-linking density of EVA.

The content of the cross-linking agent in the adhesive resin film preferably is in the range of 0.05 to 5.0 parts by weight, in particular 0.1 to 3.0 parts by weight based on 100 parts by weight of EVA. When the content of the cross-linking agent is excessive, the compatibility of the cross-linking agent with the transparent adhesive resin is apt to be reduced.

The adhesive resin film may contain cross-linking auxiliary. The cross-linking auxiliary can increase the gel fraction of EVA and improve the mechanical strength of the intermediate film. Examples of the cross-linking auxiliaries (compounds having a radical polymerizable group as functional group) include trifunctional cross-linking auxiliaries such as triallyl cyanurate and triallyl isocyanurate, monofunctional or bifunctional cross-linking auxiliaries of (meth)acryl esters (e.g., NK Ester, etc.). Triallyl cyanurate and triallyl isocyanurate are preferred, and triallyl isocyanurate is particularly preferred. The content of the cross-linking auxiliary generally is not more than 10 parts by weight, preferably in the range of 0.1 to 5 parts by weight based on 100 parts by weight of the transparent adhesive resin.

The adhesive resin film may contain various additives such as plasticizer and adhesion improver for improvement or adjustment of various properties of the film (e.g., mechanical strength, adhesive property (adhesion), optical characteristics such as transparency, heat resistance, light-resistance, cross-linking rate), as well as for repression of occurrence of acetic acid, particularly for improvement mechanical strength.

Polybasic acid ester and polyvalent alcohol ester can be used as the plasticizer. Examples of the plasticizers include dioctyl phthalate, dihexyl adipate, triethylene glycol-di-2-ethyl butyrate, butyl sebacate, tetraethylene glycol diheptanoate and triethylene glycol dipelargonate. The plasticizers can be each used singly, or in combination of two or more kinds. The content of the plasticizer preferably is not more than 5 parts by weight based on 100 parts by weight of EVA.

Silane-coupling agent can be used as the adhesion improver. Examples of the silane coupling agents include γ-chloropropylmethoxysilane, vinylethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropyltrimethoxysilane, γ-aminopropyltriethoxysilane and N-β-(aminoethyl)-γ-aminopropyltrimethoxysilane. These silane coupling agents can be each used singly, or in combination of two or more kinds. The content of the adhesiveness-improving agent preferably is not more than 5 parts by weight based on 100 parts by weight of EVA.

The adhesive resin film may comprise an ultraviolet absorbent, a photostabilizer and an antioxidant additionally.

Examples of the ultraviolet absorbents include benzophenone-type ultraviolet absorbents such as 2-hydroxy-4-methoxybenzophenone, 2-hydroxy-4-n-dodecyloxybenzophenone, 2,4-dihydroxybenzophenone, 2,2'-dihydroxy-4-methoxybenzophenone, 2,2'-dihydroxy-4,4'-dimethoxybenzophenone and 2-hydroxy-4-n-octoxybenzophenone. The content of the benzophenone-type ultraviolet absorbent preferably is in the range of 0.01 to 5 parts by weight based on 100 parts by weight of EVA.

A hindered amine photostabilizer can be used as the photostabilizer. Examples of the photostabilizers include LA-52, LA-57, LA-62, LA-63, LA-63p, LA-67 and LA-68 (all manufactured by ADEKA Co., Ltd.), Tinuvin 744, Tinuvin 770, Tinuvin 765, Tinuvin 144, Tinuvin 622LD,and CHIMASSORB 944LD (manufactured by Ciba Specialty Chemicals Co., Ltd.), and UV-3034 (manufactured by B. F. Goodrich). The photostabilizers can be each used singly, or in combination of two or more kinds. The content of the photostabilizer preferably is in the range of 0.01 to 5 parts by weight based on 100 parts by weight of EVA.

Examples of the antioxidants include hindered phenol-type antioxidants such as N,N'-hexan-1,6-diyl-bis(3 -(3 ,5-di-tert-butyl-4-hydroxyphenyl)propionamid e], phosphorus-type heat stabilizers, lactone-type heat stabilizers, vitamin E-type heat stabilizers and sulfur-type heat stabilizers.

The thickness of the adhesive resin film generally is in the range of 2 µm to 2 mm.

The adhesive resin film can be formed, for example, by mixing EVA with the above-mentioned additives and kneading by means of roll mill, and then forming the sheet by film formation method using extrusion molding, calendaring or T-die extrusion. Otherwise, the adhesive resin film can be also formed by dissolving the composition including EVA, etc., in a solvent to form a solution, applying the solution to an appropriate support by means of an appropriate coater such as roll coater, knife coater and doctor blade, and then drying it to form a coated layer. The heating temperature at the film-formation preferably is in the range of 40 to 90°C, in particular 50 to 80 °C.

### (Transparent substrate)

The two transparent substrates used in the decorative laminated glass may be the same as or different from each other. The combination of transparent substrates can be determined depending on the strength of the transparent substrate and the application of the laminated glass.

In the present invention, the "glass" of the laminated glass means a common transparent substrate, and thus, the "laminated glass" means such transparent substrates having at least an intermediate film bonded between them.

Examples of the transparent substrates include a glass plate such as silicate salt glass, inorganic glass plate and colorless transparent glass plate and a plastic film. Examples of the plastic films include polyethylene terephthalate (PET) film, polyethylene naphthalate (PEN) film, and polyethylene butyrate film. Of them, glass plate and PET film are preferred, and glass plate is particularly preferred. The thickness of the transparent substrate generally is in the range of 1 to 20 mm.

The decorative laminated glass comprises two transparent substrates and an intermediate film including two adhesive resin films and a base film having an ink layer printed in a predetermining pattern and arranged between the adhesive resin films. The intermediate film is arranged between the transparent substrates to be combined with each other. Such a laminated glass is prepared by laminating the transparent substrate, the adhesive resin film, the base film having the ink layer, the adhesive resin film and the transparent substrate described above in this order to provide a laminated body, degassing the laminated body, and then heating the laminated body under pressure to crosslinke and cure EVA and combine with each other.

The cross-linking is carried out by heating generally the laminated body at a temperature of 100 to 150°C, particularly 130°C for 10 to 120 minutes, preferably 10 to 60 minutes. The cross-linking can be carried out after preliminary pressured bonding, for example, at a temperature of 80 to 120°C. The cross-linking preferably is carried out at the temperature of 130°C (atmospheric temperature) for 10 to 30 minutes. The cross-linking preferably is carried out with applying a pressure to the laminated body. The laminated body after cross-linking is normally cooled to room temperature, and the cooling rate then is favorably as high as possible.

In case the decorative laminated glass is used for long time period under high-temperature and high-humidity environment, the separation between the base film, the ink layer and the adhesive resin film is prevented. Therefore, the decorative laminated glass according to the present invention maintains the appearance property such as transparency and design. The decorative laminated glass can be employed for the following uses: an inserted glass, a side window (door glass) and a rear glass in an automobile; a door glass of a door leaf for passenger to go in or out, a door glass for chamber, and a window glass in a railway vehicle (e.g., corridor train, express train, special train, sleeping car), a window glass and a door glass in constructions such as building, a showcase for display, a glass of show window and water cistern. However, the applications are not limited thereto.

### [Examples]

The invention is illustrated in detail using the following Examples.

### (Example 1)

A corona-treated polyethylene terephthalate film (thickness: 200 µm, manufactured by Viewcol) was used as the base film subjected to the adhesion-facilitating treatment.

Ink was printed in a predetermining pattern on the corona-treated surface of the corona-treated base film by inkjet-printing process and dried at room temperature to provide an ink layer.

Then, raw materials having the following formulation 1 were fed into the roll mill and kneaded at 80°C to provide a composition. The composition was shaped by calendaring molding method and cooled to provide an EVA adhesive resin film (thickness: 0.4 mm). In the calendaring molding method, the calendar rolls had a temperature of 80°C and the processing rate was 5m/min.

### Formulation 1;

EVA (vinyl acetate content 25 parts by weight based on 100 parts by weight of EVA) 100 parts by weight,
Cross-linking agent (1,1-bis(tert-hexylperoxy)-3,3,5-trimethylcyclohexane) 2.5 parts by weight,
Cross-linking auxiliary (triallyl isocyanurate) 2.0 parts by weight,
Silane-coupling agent (γ-methacryloxypropyltrimethoxysilane) 0.5 part by weight.

The base film subjected to the adhesion-facilitating treatment and having the ink layer was inserted between the two EVA adhesive resin films to provide a intermediate film. Then, the intermediate film was inserted between two glass plates (thickness: 3 mm) to provide a laminated body. The laminated body was put into a rubber case to be degassed in a vacuum and then preliminary bonded at 100°C under pressure. The laminated body was introduced into an oven and heated under the condition of a pressure of 13×10⁵ Pa and a temperature of 140°C for 30 minutes to provide a decorative laminated glass.

### (Example 2)

A decorative laminated glass was prepared in a similar manner to Example 1, except that a polyethylene terephthalate film (thickness: 50 µm, manufactured by Sun Shade Kogyo Co., Ltd.) having an adhesion-facilitating layer (thickness: 5 µm) formed by coating a composition comprising an acrylic resin was used as the base film subjected to the adhesion-facilitating treatment.

### (Comparative Example 1)

A decorative laminated glass was prepared in a similar manner to Example 1, except that a polyethylene terephthalate film (thickness 125 µm) which is not subjected to the adhesion-facilitating treatment was used in place of the base film subjected to the adhesion-facilitating treatment.

### (Comparative Example 2)

Raw materials having the following formulation 2 were fed into the roll mill and kneaded at 80°C to provide a composition. The composition was inserted between two polyethylene terephthalate films (thickness 0.1 mm) to provide a laminated body, and then the laminated body was pressed by press molding at 120 °C and 10 MPa and cooled at room temperature. The polyethylene terephthalate films were separated from the laminated body to provide a PVB adhesive resin film (thickness: 0.4 mm).

### Formulation 2:

Polyvinylbutyral resin (average polymerization degree: 1750, total acetalization degree: 83 % by weight) 100 parts by weight Plasticizer (triethylene glycol di(2-ethylbutyrate)) 33 parts by weight

Then, a decorative laminated glass was prepared in a similar manner to Example 1, except that the PVB adhesive resin films were used in place of the EVA adhesive resins.

### (Comparative Example 3)

A decorative laminated glass was prepared in a similar manner to Example 1, except that a polyethylene terephthalate film (thickness: 50 µm, manufactured by Sun Shade Kogyo Co., Ltd.) having an adhesion-facilitating layer (thickness: 5 µm) formed by coating a composition comprising an acrylic resin was used as the base film subjected to the adhesion-facilitating treatment and the PVB adhesive resin films prepared by the same manner as the example 3 was used in place of the EVA adhesive resin films.

### (Comparative Example 4)

A corona-treated polyethylene terephthalate film (thickness: 200 µm, manufactured by Viewcol) was used as the base film subjected to the adhesion-facilitating treatment.

Ink was printed in a predetermining pattern on the corona-treated surface of the corona-treated base film by inkjet-printing process and dried at room temperature to provide an ink layer.

Then, raw materials having the following formulation 1 were fed into the roll mill and kneaded at 80°C to provide a composition. The composition was shaped by calendaring molding method and cooled to provide an EVA adhesive resin film (thickness: 0.4 mm). In the calendaring molding method, the calendar rolls had a temperature of 80°C and the processing rate was 5m/min.

### Formulation 1;

EVA (vinyl acetate content 25 parts by weight based on 100 parts by weight of EVA) 100 parts by weight,
Cross-linking agent (1,1-bis(tert-hexylperoxy)-3,3,5-trimethylcyclohexane) 2.5 parts by weight,
Cross-linking auxiliary (triallyl isocyanurate) 2.0 parts by weight,
Silane-coupling agent (γ-methacryloxypropyltrimethoxysilane) 0.5 part by weight.

The base film subjected to the adhesion-facilitating treatment and having the ink layer was inserted between the two EVA adhesive resin films to provide a intermediate film. Then, the intermediate film was inserted between a polyvinyl chloride sheet (Altron (trade name), manufactured by Mitsubishi Plastics, Inc., thickness: 100 µm) and a glass plate (thickness: 3 mm) to provide a laminated body. The laminated body was put into a rubber case to be degassed in a vacuum and then preliminary bonded at 100°C under pressure. The laminated body was introduced into an oven and heated under the condition of a pressure of 13×10⁵ Pa and a temperature of 140°C for 30 minutes to provide a decorative laminated glass.

### (Comparative Example 5)

A decorative laminated glass was prepared in a similar manner to Example 4, except that a polyethylene terephthalate film (thickness: 50 µm, manufactured by Sun Shade Kogyo Co., Ltd.) having an adhesion-facilitating layer (thickness: 5 µm) formed by coating a composition comprising an acrylic resin was used as the base film subjected to the adhesion-facilitating treatment.

### (Comparative Example 6)

Raw materials having the following formulation 2 were fed into the roll mill and kneaded at 80°C to provide a composition. The composition was inserted between two polyethylene terephthalate films to provide a laminated body, and then the laminated body was pressed by press molding at 120 °C and 10 MPa and cooled at room temperature. The polyethylene terephthalate films were separated from the laminated body to provide a PVB adhesive resin film (thickness: 0.4 mm).

### Formulation 2:

Polyvinylbutyral resin (average polymerization degree: 1750, total acetalization degree: 83 % by weight) 100 parts by weight Plasticizer (triethylene glycol di(2-ethylbutyrate)) 33 parts by weight

Then, a decorative laminated glass was prepared in a similar manner to Example 4, except that the PVB adhesive resin films were used in place of the EVA adhesive resins.

### (Comparative Example 7)

A decorative laminated glass was prepared in a similar manner to Example 4, except that a polyethylene terephthalate film (thickness: 50 µm, manufactured by Sun Shade Kogyo Co., Ltd.) having an adhesion-facilitating layer (thickness: 5 µm) formed by coating a composition comprising an acrylic resin was used as the base film subjected to the adhesion-facilitating treatment and the PVB adhesive resin films prepared by the same manner as the comparative example 4 were used in place of the EVA adhesive resins.

### (Evaluation)

The decorative laminated glasses were left under the environment of a temperature of 85°C and a humidity of 85% RH, and separation of the ink layer from the base film was evaluated by visual observation. Results are summarized in Table 1.

In Table 1, "O" indicates that any separation was not caused, and "×" indicates that the separation was caused.

**[Table 1]**

| | Adhesive resin film | Adhesion-facilitating treatment | Transparent substrate | 85°C/85%RH | | | | |
|---|---|---|---|---|---|---|---|---|
| | | | | 1 day | 3 days | 2 weeks | 3 weeks | 4 weeks |
| Example 1 | EVA | Corona treatment | Glass plate/Glass plate | ○ | ○ | ○ | ○ | ○ |
| Example 2 | EVA | Acrylic resin layer | Glass plate/Glass plate | ○ | ○ | ○ | ○ | ○ |
| Comparative Example 1 | EVA | None | Glass plate/Glass plate | ○ | × | × | × | × |
| Comparative Example 2 | PVB | Corona treatment | Glass plate/Glass plate | ○ | ○ | ○ | × | × |
| Comparative Example 3 | PVB | Acrylic resin layer | Glass plate/Glass plate | ○ | ○ | ○ | × | × |
| Comparative Example 4 | EVA | Corona treatment | PVC sheet/Glass plate | ○ | ○ | ○ | × | × |
| Comparative Example 5 | EVA | Acrylic resin layer | PVC sheet/Glass plate | ○ | ○ | ○ | × | × |
| Comparative Example 6 | PVB | Corona treatment | PVC sheet/Glass plate | ○ | × | × | × | × |
| Comparative Example 7 | PVB | Acrylic resin layer | PVC sheet/Glass plate | ○ | × | × | × | × |

## Claims

1. A decorative laminated glass comprising two transparent substrates and an intermediate film including two adhesive resin films and a base film having an ink layer printed in a predetermining pattern therebetween, the intermediate film being arranged between the transparent substrates to be combined with each other,
wherein the base film is subjected to an adhesion-facilitating treatment and
the adhesive resin film comprises an ethylene vinyl acetate copolymer.

2. The decorative laminated glass as defined in claim 1, wherein the base film has an adhesion-facilitating layer comprising a transparent adhesive resin thereon.

3. The decorative laminated glass as defined in claim 2, wherein the transparent adhesive resin is an acrylic resin.

4. The decorative laminated glass as defined in any of claims 1 to 3, wherein the base film is a subjected to a corona treatment or plasma treatment.
